Europäisches Patentamt

European Patent Office

Office européen des brevets

(19)

(11) Numéro de publication: **0 271 391**
**A1**

(12)

# DEMANDE DE BREVET EUROPEEN

(21) Numéro de dépôt: 87402598.4

(22) Date de dépôt: 18.11.87

(51) Int. Cl.⁴: **G 11 B 5/127**

(30) Priorité: 18.11.86 FR 8615998

(43) Date de publication de la demande:
15.06.88 Bulletin 88/24

(84) Etats contractants désignés: ES

(71) Demandeur: COMPAGNIE EUROPEENNE DE
COMPOSANTS ELECTRONIQUES LCC
50, rue Jean-Pierre Timbaud
F-92400 Courbevoie (FR)

(72) Inventeur: Chabrolle, Jacques
THOMSON-CSF SCPI 19, avenue de Messine
F-75008 Paris (FR)

(74) Mandataire: Guérin, Michel et al
THOMSON-CSF SCPI 19, avenue de Messine
F-75008 Paris (FR)

(54) Tête magnétique pour pistes magnétiques à fort champ coercitif, et procédé de fabrication.

(57) L'invention concerne une tête magnétique de lecture et/ou d'écriture monopiste ou multipiste. La tête magnétique comprend, pour une piste magnétique, deux pièces polaires séparées par un entrefer (15), chacune étant logée dans une garniture réalisée en un matériau non magnétique, les pièces polaires et la garniture possédant un plan commun définissant la face active de la tête. La tête magnétique comprend encore une élément de fermeture (26) du circuit magnétique supportant au moins une bobine (27).

# FIG_8

EP 0 271 391 A1

## Description

TETE MAGNETIQUE POUR PISTES MAGNETIQUES A FORT CHAMP COERCITIF ET PROCEDE DE FABRICATION

L'invention concerne les têtes magnétiques d'écriture et/ou de lecture pour pistes magnétiques à fort champ coercitif, c'est-à-dire pour des valeurs allant de 24 000 à 40 000 A/m.

Afin d'améliorer la sécurité des enregistrements magnétiques digitaux, en particulier dans le domaine de la monétique, il est apparu des couches magnétiques ayant un champ coercitif élevé. Ces derniers ont progressivement évolué vers des valeurs très importantes, généralement supérieures à 20 000 A/m. Ce type de support magnétique est particulièrement difficile à saturer et, de ce fait, nécessite des têtes magnétiques d'enregistrement d'un type spécial. En effet, la géométrie habituellement exploitée pour la construction des têtes ne peut être remise totalement en cause puisque le principe de l'enregistrement magnétique consiste à exploiter un circuit magnétique permettant la concentration d'un champ magnétique dans une section restreinte dudit circuit. Cette zone, appelée entrefer, de très faible longueur et de perméabilité de l'ordre de 1, présente une réluctance importante qui contribue et favorise l'épanouissement du champ magnétique en dehors du circuit. Cette zone est donc génératrice de "fuites" qui assurent la polarisation magnétique de la couche constituant la piste d'enregistrement, laquelle est plus ou moins en contact avec cette zone de la tête d'enregistrement.

Généralement, le circuit magnétique favorisant cette concentration de champ (créé par le passage d'un courant dans une bobine placée sur ledit circuit) est réalisé dans un matériau magnétique dont les caractéristiques sont adaptées à cette application. La perméabilité magnétique est choisie aussi élevée que possible afin d'assurer une bonne canalisation du flux magnétique créé par le passage du courant dans la bobine d'excitation. De plus, il est recherché une bonne induction à saturation afin de minimiser le courant d'excitation. En raison de l'application en fréquence, il est recherché des matériaux qui présentent de faibles pertes en fonction de la fréquence (pertes par courants de Foucault, et pertes par hystérésis). Les matériaux les mieux adaptés, dont les caractéristiques intrinsèques répondent correctement à ces trois grandeurs, sont généralement des matériaux frittés du type ferrite, qui de par leur structure garantissent un bon compromis de celles-ci. Cependant, pour l'application en question, ces matériaux n'ont pas une induction à saturation suffisamment élevée pour assurer une bonne saturation de la couche d'enregistrement. Généralement, les faibles sections mises en oeuvre dans la zone de fuite (région de l'entrefer) entraînent une saturation prématurée du matériau de concentration et, de ce fait, ne permettent pas de travailler à des champs très élevés tels que ceux nécessaires pour assurer la saturation d'une piste d'enregistrement dont le champ coercitif peut atteindre 40 000 A/m et davantage.

Afin de pallier ces inconvénients, l'invention propose une tête magnétique permettant d'assurer la saturation de couches magnétiques dont les champs coercitifs sont supérieurs à 20 000 A/m. Cette tête magnétique est compatible avec les dispositifs de lecture et d'écriture déjà en usage. l'invention met en oeuvre un matériau magnétique métallique massif dont les caractéristiques magnétiques sont bien adaptées pour assurer la saturation d'une piste à champ coercitif élevé (plus grand que 20 000 A/m par exemple). Elle permet de réaliser des têtes d'enregistrement sur pistes à haut champ coercitif tout en ayant une excellente résistance à l'usure. Ce dernier point, d'ordre strictement mécanique, présente un très grand intérêt en exploitation entre autres pour la maintenance et la fiabilité des performances électro-magnétiques d'écriture. Elle permet de travailler mécaniquement (rectification plane, cylindrique etc.) un matériau qui, de par sa composition, est réputé très sensible aux contraintes sans être dans l'obligation de lui faire subir un traitement thermique final capable de redonner à ce matériau ses caractéristiques originelles.

L'invention a donc pour objet une tête magnétique de lecture et/ou d'écriture monopiste ou multipiste, caractérisée en ce qu'elle comprend pour une piste magnétique :

- deux pièces polaires séparées par un entrefer, chacune étant logée dans une garniture réalisée en un matériau non magnétique, les pièces polaires et la garniture possédant un plan commun définissant la face active de la tête magnétique,
- un élément de fermeture du circuit magnétique,
- au moins une bobine disposée sur l'élément de fermeture,

la tête magnétique étant également caractérisée en ce que chaque pièce polaire présente une face active, une face de contact avec l'entrefer et de section restreinte et une face de contact avec ledit élément de fermeture.

L'invention a encore pour object un procédé de fabrication collectif de têtes magnétiques de lecture et/ou d'écriture monopiste ou multipiste, caractérisé en ce qu'il comprend les étapes suivantes :

- 1ère étape : usinage des pièces polaires pour qu'elles présentent une face active, une première face de contact de section restreinte et une seconde face de contact,

- 2ème étape : usinage de logements de réception des pièces polaires dans des barrettes de matériau non magnétique,

- 3ème étape : fixation des pièces polaires dans leurs logements,

- 4ème étape : association deux à deux des barrettes équipées avec interposition d'une feuille destinée à constituer l'entrefer des têtes magnétiques, l'association étant réalisée de façon à mettre les premières faces de contact des pièces polaires d'une barrette en vis-à-vis avec celle des pièces polaires de l'autre barrette,

- 5ème étape : découpe des deux barrettes associées pour fournir des pièces élémentaires de face active monopiste ou multipiste,

- 6ème étape : montage d'au moins une bobine sur chaque élément de fermeture du circuit magnétique,

- 7ème étape : montage de chaque tête magnétique par association de ses différents constituants, les éléments de fermeture ayant des faces communes avec les secondes faces de contact des pièces polaire.

L'invention sera mieux comprise et d'autres avantages apparaîtront au moyen de la description qui va suivre, donnée à titre non limitatif, et des figures annexées parmi lesquelles :

- la figure 1 représente une pièce polaire utilisée dans la tête magnétique selon l'invention,

- les figures 2 à 7 illustrent le procédé collectif de traitement des barrettes de garnitures pour pièces polaires,

- les figures 8 à 11 illustrent le montage d'une tête magnétique selon l'invention.

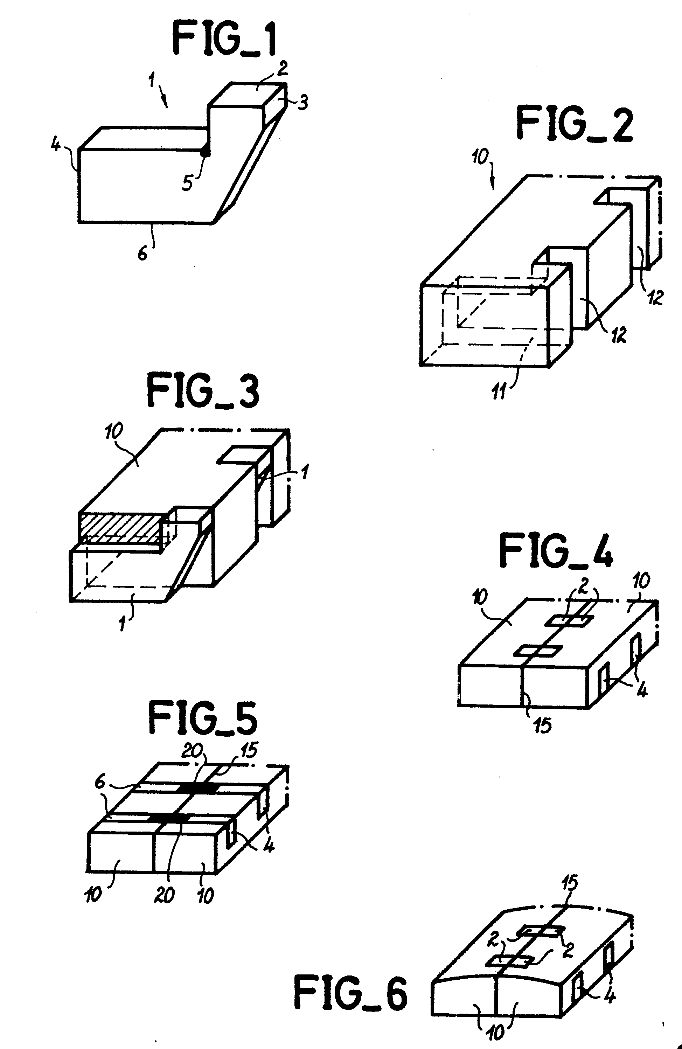

Le profil de la pièce polaire représentée à la figure 1 est particulièrement avantageux dans le cadre de la présente invention. D'autres formes peuvent également être mises en oeuvre si elles permettent la réalisation d'un circuit magnétique avec entrefer incorporé. Dans la suite de la description, on désignera sous le terme de "faces actives" les parties des pièces destinées à être en contact avec une piste magnétique. Un point important de l'invention est constitué par l'association d'un matériau métallique, magnétique, à haute performance (pour constituer les pièces polaires) et d'un matériau non magnétique tel que la céramique (pour constituer la garniture des pièces polaires). Ces éléments participent non seulement à la géométrie générale de la face active mais procurent à la tête magnétique une très bonne résistance à l'usure au cours de son exploitation.

La pièce polaire, désignée sous la référence générale 1, a la forme d'un L dont une branche est tronquée du côté de la jonction des deux branches du L. La géométrie donnée à la pièce polaire permet de définir des faces particulières : une face active 2, une face 3 de contact avec l'entrefer, une face arrière 4 et une face 6 de contact avec l'élément de fermeture du circuit magnétique. Une rainure 5 est usinée dans l'angle intérieur du L pour supprimer le congé existant à cet endroit.

Le matériau utilisé pour réaliser la pièce polaire doit avoir de très bonnes caractéristiques magnétiques. On peut employer les alliages suivants : fer-nickel, fer-nickel-chrome, fer-nickel-molybdène, fer-nickel-chrome-molybdène, fer-nickel-chrome-vanadium, fer-silicium, fer-cobalt. De très bonnes performances sont obtenues avec un alliage fer-nickel comprenant 52 % de fer et 48 % de nickel.

Les garnitures des pièces polaires peuvent être obtenues de la manière suivante. On part d'une barrette de matériau non magnétique que l'on usine pour pouvoir y loger les pièces polaires. La figure 2 illustre une étape du procédé de réalisation des têtes magnétiques selon l'invention. La barrette 10 est avantageusement un parallélépipède allongé en céramique non magnétique et résistant particulièrement bien à l'usure. On peut utiliser de l'alumine de grande pureté. L'usinage consiste à réaliser des rainures 11 et des encoches 12 qui permettront le logement de pièces polaires. La figure 3 montre les pièces polaires 1 logées dans la barrette usinée 10. Les pièces polaires sont fixées dans leur logement. Elles peuvent être collées, introduites en force ou fixées par tout autre moyen.

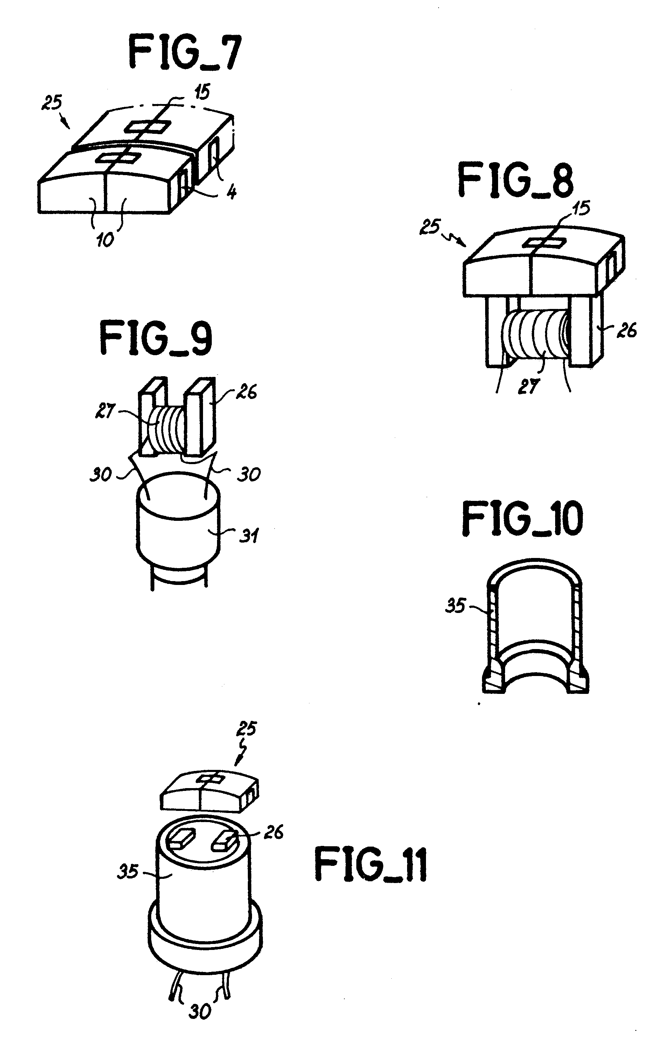

Les barrettes équipées des pièces polaires sont ensuite associées deux à deux comme le montre la figure 4. Sur cette figure les pièces polaires sont visibles par leurs faces actives 2 et leurs faces arrière 4. Entre les deux barrettes est incorporée une feuille mince 15 (d'épaisseur inférieure à 100 μ) et destinée à constituer l'entrefer des têtes magnétiques. Cette feuille peut être en un matériau tel que le mica, du verre, du bronze au béryllium ou encore un matériau organique. L'association des deux barrettes 10, des pièces polaires et de l'entrefer 15 peut être renforcée par incorporation, dans les espaces limités par les parties tronquées des pièces polaires, d'une substance adhésive telle qu'une résine époxy. C'est ce que montre la figure 5 qui est une vue de dessous de la figure 4. Les zones noircies 20 figurent la substance adhésive citée plus haut. On procède ensuite à un opération de rectification cylindrique, comme le montre la figure 6, en vue d'obtenir un profil susceptible d'assurer un bon enroulement et un bon contact avec le support magnétique d'enregistrement.

La figure 7 illustre l'opération de découpage des barrettes équipées et usinées pour obtenir des pièces élémentaires 25 dites de "face active".

La figure 8 illustre l'association de cette face active à un élément 26 de fermeture du circuit magnétique. Cet élément 26 a avantageusement la forme d'un U ou d'un H dont deux branches prendront contact avec les faces 6 des pièces polaires. L'élément de fermeture 26 supporte également une ou deux bobines 27 selon l'utilisation que l'on veut faire de la tête magnétique.

La bobine 27 (ou les bobines le cas échéant) aura ses connexions soudées aux fils de sortie 30 de la tête comme le montre la figure 9. Ceux-ci sont immobilisés dans un bloc isolant 31 qui sera enfermé dans un boîtier 35 du type représenté en coupe à la figure 10. La mise en boîtier permet d'assurer, lors du montage sur les équipements d'encodage et/ou de lecture, un bon azimutage de l'entrefer. L'ensemble magnétique peut être immobilisé dans le boîtier par une résine comme le montre la figure 11.

Les pièces 25 peuvent être simplement posées sur l'élément 26 et maintenues par de la résine ou des points de colle au reste de la tête. L'élément de fermeture 26 du circuit magnétique peut être réalisé en ferrite, dans un autre matériau fritté, dans un matériau métallique feuilleté ou non. Il doit présenter des caractéristiques électro-magnétiques intéressantes telles que : perméabilité élevée (2 500 et plus), induction à saturation importante (de 0,8 à 2,6 teslas), champ coercitif faible (environ 4,8 A/m) et induction rémanente supérieure ou égale à 0,7 tesla.

L'un des avantages de la technologie de l'invention réside dans le fait qu'un matériau métallique est associé à un matériau céramique (dans le cas le plus avantageux) non magnétique qui joue le rôle de pièce anti-usure et permet un usinage collectif assurant un haut rendement et une excellente productivité.

La pièce polaire est préférentiellement réalisée en un alliage à base de fer et de nickel qui peut contenir des ajouts favorisant entre autres une faible magnétostriction, un coefficient de température de l'induction faible dans la gamme allant de -25 à +75°C, une induction rémanente élevée (de l'ordre de 0,6 tesla) et un faible champ coercitif (environ 4,8 A/m).

Les têtes magnétiques selon l'invention peuvent être utilisées pour des enregistrements de type perpendiculaire ou parallèle, sur support magnétique de type oxyde ou de type métallique. Les supports d'enregistrement utilisables peuvent être rigides ou souples.

Les têtes magnétiques de l'invention permettent l'enregistrement à saturation de supports magnétiques ayant des champs coercitifs supérieurs à 20 000 A/m avec des courants d'enregistrement inférieurs ou égaux à 1 ampère crête à crête et pour des densités d'enregistrement inférieures ou supérieures à 210 bits par pouce (densités habituellement exploitées dans les applications de type monétique ou pour contrôle d'accès). Les têtes magnétiques selon l'invention peuvent être utilisées pour la lecture et l'écriture. Elles peuvent être monopistes ou mutlipistes en fonction de la découpe de la barrette de base.

Parmi les applications possibles, on peut noter : le contrôle d'accès, le traitement des cartes de crédit, les péages magnétiques, les applications du type grande diffusion telles que celles de l'audio ou de la vidéo.

**Revendications**

1. Tête magnétique de lecture et/ou d'écriture monopiste ou multipiste, caractérisée en ce qu'elle comprend pour une piste magnétique :

- deux pièces polaires (1) séparées par un entrefer (15), chacune étant logée dans une garniture réalisée en un matériau non magnétique, les pièces polaires et la garniture possédant un plan commun définissant la face active de la tête magnétique,
- un élément de fermeture (26) du circuit magnétique,
- au moins une bobine (27) disposée sur l'élément de fermeture,

la tête magnétique étant également caractérisée en ce que chaque pièce polaire (1) présente une face active (2), une face de contact (3) avec l'entrefer et de section restreinte et une face de contact (6) avec ledit élément de fermeture (26).

2. Tête magnétique selon la revendication 1, caractérisée en ce que les pièces polaires (1) ont une forme générale en L.

3. Tête magnétique selon la revendication 2, caractérisée en ce que l'une des branches du L est tronquée du côté de leur jonction pour délimiter la face de contact (3) avec l'entrefer.

4. Tête magnétique selon l'une quelconque des revendications 1 à 3, caractérisée en ce que les pièces polaires (1) sont réalisées en un alliage de fer et de nickel.

5. Tête magnétique selon la revendication 4, caractérisée en ce que ledit alliage comprend 52 % de fer et 48 % de nickel.

6. Tête magnétique selon l'une quelconque des revendications 1 à 5, caractérisée en ce que la garniture est en céramique.

7. Tête magnétique selon la revendication 6, caractérisée en ce que ladite céramique est de l'alumine.

8. Tête magnétique selon l'une quelconque des revendications 1 à 7, caractérisée en ce que l'entrefer est constitué d'une feuille de mica, de verre, de bronze au béryllium ou d'un matériau organique.

9. Tête magnétique selon l'une quelconque des revendications 1 à 8, caractérisée en ce que l'ensemble formé par les garnitures et les pièces polaires est rendu solidaire par une substance adhésive (20).

10. Tête magnétique selon la revendication 9, caractérisée en ce que ladite substance adhésive est une résine époxy.

11. Tête magnétique selon l'une quelconque des revendications 1 à 10, caractérisée en ce que l'élément de fermeture (26) a une forme en U ou en H.

12. Tête magnétique selon l'une quelconque des revendications 1 à 11, caractérisée en ce que l'élément de fermeture est en ferrite.

13. Tête magnétique selon l'une quelconque des revendications précédentes, caractérisée en ce que la face active de la tête a un profil rectifié cylindriquement.

14. Procédé de fabrication collectif de têtes magnétiques de lecture et/ou d'écriture monopistes ou multipistes, caractérisée en ce qu'il comprend les étapes suivantes :

- 1ère étape : usinage des pièces polaires pour qu'elles présentent une face active (2), une première face de contact (3) de section restreinte et une seconde face de contact (6),
- 2ème étape : usinage de logements (11,12) de réception des pièces polaires (1) dans des barrettes (10) de matériau non magnétique,
- 3ème étape : fixation des pièces polaires (1) dans leurs logements,
- 4ème étape : association deux à deux des barrettes équipées avec interposition d'une feuille (15) destinée à constituer l'entrefer des têtes magnétiques, l'association étant réalisée de façon à mettre les premières faces de contact (3) des pièces polaires d'une barrette en vis-à-vis avec celles ces pièces polaires de l'autre barrette,

- 5ème étape : découpe des deux barrettes associées pour fournir des pièces élémentaires (25) de face active monpiste ou multipiste,

- 6ème étape : montage d'au moins une bobine (27) sur chaque élément de fermeture (26) du circuit magnétique,

- 7ème étape : montage de chaque tête magnétique par association de ses différents constituants, les éléments de fermeture ayant des faces communes avec les secondes faces de contact (6) des pièces polaires.

15. Procédé selon la revendication 14, caractérisé en ce que, entre la quatrième et la cinquième étape, est prévue une étape intermédiaire de rectification cylindrique des faces actives.

0271391

FIG_1

FIG_2

FIG_3

FIG_4

FIG_5

FIG_6

0271391

FIG_7

FIG_8

FIG_9

FIG_10

FIG_11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 686 466  (SATO et al.)<br>* Colonne 3, lignes 7-29,39-48,58-62; colonne 4, lignes 19-30; colonne 5, lignes 21-24; colonne 6, lignes 32-42; figures 2,5 * | 1-3,8, 13 | G 11 B   5/127 |
| A | | 14 | |
| X | US-A-4 291 354  (CHASE)<br>* Colonne 4, lignes 3-14,36-46; colonne 5, lignes 14-34; colonne 6, ligne 1 - colonne 9, ligne 39 * | 1,6,8-10 | |
| A | | 14 | |
| A | US-A-3 584 378  (DUINKER et al.)<br>* Colonne 4, lignes 29-58,68 - colonne 5, ligne 6; figure 2 * | 1,9-14 | |
| A | FR-A-1 159 994  (COMPAGNIE DES MACHINES BULL)<br>* Page 2, colonne de gauche, ligne 19 - colonne de droite, ligne 14; figures 1,3,4 * | 1-4,9, 10,14 | |
| A | US-A-2 361 752  (EILENBERGER)<br>* Page 4, colonne de gauche, lignes 8-22; figures 1,2 * | 1 | **DOMAINES TECHNIQUES RECHERCHES (Int. Cl.4)**<br><br>G 11 B |
| A | US-A-3 214 645  (GABOR)<br>* Colonne 2, ligne 34 - colonne 3, ligne 26; figures 4-8 * | 1,4,11 | |
| A | US-A-3 000 078  (EMENAKER et al.)<br>* Colonne 3, lignes 4-20; figure 3 *<br>---                        -/- | 1,4 | |

Le présent rapport a été établi pour toutes les revendications

| Lieu de la recherche | Date d'achèvement de la recherche | Examinateur |
|---|---|---|
| LA HAYE | 19-02-1988 | FUX J. |

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 7, no. 188 (P-217)[1333], 17 août 1983; & JP-A-58 88 814 (MATSUSHITA DENKI SANGYO K.K.) 27-05-1983 <br> * Résumé * <br> --- | 1-3,8,9 ,11,12 | |
| A | PATENT ABSTRACTS OF JAPAN, vol. 6, no. 192 (P-145)[1070], 30 septembre 1982; & JP-A-57 103 116 (SONY K.K.) 26-06-1982 <br> * Résumé * <br> --- | 1-3,11, 12 | |
| A | PATENT ABSTRACTS OF JAPAN, vol. 4, no. 78 (P-14)[560], 6 juin 1980, page 41P 14; & JP-A-55 42 351 (MATSUSHITA DENKI SANGYO K.K.) 25-03-1980 <br> * Résumé * <br> --- | 1-12 | |
| A | EP-A-0 068 995 (THOMSON-CSF) <br> * Revendications 1,2; figures 1,2 * <br> --- | 1,6,11, 12 | |
| A | US-A-3 466 637 (HAGADORN) <br> * Colonne 3, lignes 50-75; colonne 4, ligne 72 - colonne 6, ligne 41; colonne 7, lignes 36-61; figures 1,2,3A,3B,4,5,6 * <br> ----- | 1,6,7,9 -12,14 | DOMAINES TECHNIQUES RECHERCHES (Int. Cl.4) |

Le présent rapport a été établi pour toutes les revendications

| Lieu de la recherche | Date d'achèvement de la recherche | Examinateur |
|---|---|---|
| LA HAYE | 19-02-1988 | FUX J. |